# EUROPÄISCHE PATENTSCHRIFT

(11) **EP 0 769 667 B1**
(45) Veröffentlichungstag und Bekanntmachung des Hinweises auf die Patenterteilung: **08.03.2000**
(21) Anmeldenummer: 96114043.1
(22) Anmeldetag: 03.09.1996
(51) Int. Cl.: F25D 23/00, F16L 59/06

(54) **Kühl- und/oder Gefriergerät**
Refrigerating and/or freezing apparatus
Appareil de réfrigération et/ou de congélation

(30) Priorität: 19.10.1995 DE 29516519 U
(43) Veröffentlichungstag der Anmeldung: 23.04.1997
(73) Patentinhaber: AEG Hausgeräte GmbH, 90429 Nürnberg (DE)
(72) Erfinder: Jürgensen, Heinz, Dr.-Ing., 34253 Lohfelden (DE); Krug, Günter, Dipl.-Ing., 34302 Guxhagen (DE)

(56) Entgegenhaltungen:
- DE-A- 1 451 125
- DE-A- 4 302 332
- FR-A- 2 475 686

## Beschreibung

Die Erfindung bezieht sich auf ein Kühl- und/oder Gefriergerät mit einem vakuumisolierten Gehäuse und/oder mit einer vakuumisolierten Gerätetür.

Ein solches Gerät ist aus der DE 43 02 332 A1 bekannt. Dieses Kühlgerät weist einen gasdichten Außenbehälter und einen ebenfalls gasdicht ausgebildeten Innenbehälter auf, wobei der freie Raum zwischen Außenbehälter und Innenbehälter mit einem als Stützmittel dienenden Isolierstoff ausgefüllt ist. Der Außenbehälter und der Innenbehälter sind an ihren Randzonen gasdicht miteinander verbunden, so daß der mit Wärmeisolierstoff gefüllte Hohlraum zusätzlich evakuiert werden kann. Zur Erzielung eines Vakuums von insbesondere etwa 0,01 mbar ist es erforderlich, daß der Außenbehälter und der Innenbehälter sowie die Randzonen aus Edelstahl bestehen.

Als weiterer Stand der Technik wird das Dokument DE-OS 14 51 125 angesehen. Dieses Dokument offenbart ein konventionelles Kühl- und/oder Gefriergerät, bei dem der wärmeisolierte Kern mit dem eigentlichen innen liegend angeordneten Kühl- und/oder Gefrierraum innerhalb eines in sich selbst statisch tragenden Außengehäuses eingesetzt ist. Hierdurch ist es trotz nach außen hin geschlossener Bauform ermöglicht, daß bei etwaigen Störungen im Kältemittelkreislauf des Schrankes oder in der Isolation des Schrankes oder an anderen Stellen der für die Tiefhaltung der Temperatur verantwortlichen Teile am Ort der Benutzung vom Störungsdienst der reparaturbedürftige Kern einschließlich der fest an ihm angeordneten Kreislaufaggregate aus dem Außengehäuse herausgenommen wird. Es kann auf diese Weise an Ort und Stelle im Austauschverfahren ein neuer Kern eingesetzt werden.

Der Ausgangspunkt für dieses Dokument liegt daher darin, ein besonders servicefreundliches Kältegerät zu schaffen, bei dem im Falle eines Defektes ein Austauschkern schnell in das Außengehäuse eingesetzt werden kann, ohne daß zusätzliche Servicemaßnahmen vor Ort erforderlich wären. Aus diesem Grund sind daher auch sämtliche für die Kälteerzeugung erforderlichen Bauteile mit an dem Kern befestigt, so daß im Austauschfall nur leicht lösbare elektrische Steckverbindungen, nicht aber nur unter erheblichem Aufwand zu trennende Komponenten der kältemittelführenden Bauteile zu lösen sind. Damit müssen jedoch auch extern montierbare, kältemittelführende Komponenten, wie z.B. Kompressor, Verflüssiger und Kapillarrohr, in geeigneter Weise an dem Kern befestigt werden. Dies macht zusätzliche, über die bloßen Befestigungsmittel zur Montage des Kerns am Außengehäuse hinausgehende Befestigungsverbindungen erforderlich, wobei diese mit Bezug zu dem vergleichsweise schweren Kompressor besonders stabil und wenn möglich schwingungsgedämpft ausgestaltet sein müssen.

Genau dieses Erfordernis, zusätzliche Befestigungsverbindungen am Kern schaffen zu müssen, stellt einen gravierenden Nachteil bei einem vakuumisolierten Gerät dar. Ebenso können bei einem konventionellen, schaumisolierten Gerät die Türlager für die Gerätetür üblicherweise fest angeschraubt werden, wohingegen die Türlager bei einem vakuumisolierten Gerät meist aufgeschweißt werden müssen. Üblicherweise sind auch alle übrigen Anbauteile, wie beispielsweise Füße, Kompressor, oder deren Befestigungsmittel bei einem vakuumisolierten Gerät mit Edelstahlbehälter fest angeschweißt.

Im besonderen ein angeschweißtes Türlager hat den Nachteil, daß keine oder nur eine unzureichende Justiermöglichkeit besteht. Außerdem müssen grundsätzlich für alle äußeren Anbauteile zahlreiche Befestigungelemente am vakuumisolierten Gehäuse aufgeschweißt werden, weil ein Einschrauben in das Gehäuse, z.B. mit Blechschrauben, aufgrund der Vakuumdichtigkeit des Gehäuses nicht möglich ist.

Der Erfindung liegt daher die Aufgabe zugrunde, ein Kältegerät mit einem vakuumisolierten Gehäuse anzugeben, bei dem die äußeren Anbauteile in einfacher Weise am Gehäuse befestigt sind, wobei möglichst wenig angeschweißte Befestigungselemente und möglichst wenig Montageschritte vorgesehen sein sollen.

Diese Aufgabe wird erfindungsgemäß bei einem Kühl- und/oder Gefriergerät der eingangs genannten Art dadurch gelöst, daß das Gehäuse zwischen einem Sockel und einem Hut angeordnet ist, wobei sämtliche Anbauteile, wie beispielsweise Türlager, Gerätefüße, Kompressor oder sonstige elektrische Bauteile am Sockel und/oder am Hut anordenbar und anschließend der entsprechend vormontierte Sockel und der entsprechend vormontierte Hut mit Hilfe einer vergleichsweise geringen Anzahl von vorgesehenen Verbindungselementen am Gehäuse ankoppbelbar sind.

In besonders vorteilhafter Ausgestaltung der Erfindung sind der Sockel und/oder der Hut mit dem Gehäuse justierbar verbunden. Diese Ausgestaltung läßt eine Justage des Gehäuses innerhalb der Umgebung aus Sockel und Hut zu. Diese Justierbarkeit kann beispielsweise dadurch realisiert sein, daß im Hut und im Sockel Bohrungen vorgesehen sind, durch die die aufgeschweißten Gewindebolzen des Gehäuses hindurchgreifen, wobei diese Bohrungen als Langlochbohrungen ausgeführt sind.

Weitere vorteilhafte Ausgestaltungen der Erfindung sind den übrigen abhängigen Ansprüchen zu entnehmen.

Ein Ausführungsbeispiel der Erfindung wird anhand einer Fig. näher erläutert.

Dabei zeigt die Fig. in explosionsartiger Darstellung den schematischen Aufbau eines Kühlgeräts 2 mit einem vakuumisolierten Gehäuse 4 und einer vakuumisolierten Gerätetür 6. Das Gehäuse 4 besteht aus einem Edelstahlaußengehäuse 8 und einem Edelstahl-Innenbehälter 10 und weist neben einer Kompressornische 12 auf der Oberseite und auf der Unterseite angeschweißte Gewindebolzen 14 auf.

Das Gehäuse 4 wird zwischen einem Hut 16 und einem Sockel 18 angeordnet, wobei sowohl der Hut 16 als auch der Sockel 18 entsprechend der Anordnung der Gewindebolzen 14 Langlöcher 20 aufweisen, die von den Gewindebolzen 14 durchragt werden. Der Hut 16 und der Sockel 18 können mit Hilfe von hier nicht weiter dargestellten Unterlegscheiben und Muttern am Gehäuse im Umfang des Öffnungsbereichs der Langlöcher 20 justierbar befestigt werden.

Der Hut 16 und der Sockel 18 sind geeignet, alle für das Kühlgerät 2 erforderlichen äußeren Anbauteile aufzunehmen. Bezüglich des Huts 16 sind dies ein oberer Türlagerbolzen 22, ein Regler 24 und eine Elektronikschaltung 26 mit Anzeige 28. Bezüglich des Sockel 18 sind dies ein Kompressor 30, Rollen 32 sowie ein unterer Türlagerbolzen 34 vorgesehen.

An der Gerätetür sind zu den Türlagerbolzen 22 und 34 entsprechend eine obere Türlagerbuchse 36 und eine untere Türlagerbuchse 38 angeschweißt. Der im Hut 16 angeordnete obere Türlagerbolzen 22 sowie der im Sockel 18 angeordnete untere Türlagerbolzen 34 verfügen über eine hier nicht weiter dargestellte Justiereinrichtung, so daß auch die Gerätetür 6 justierbar ist.

Es ist festzuhalten, daß die hier betriebene Ausführung der Erfindung nicht ausschließlich auf ein Kühlgerät begrenzt ist, sondern ebenso auch bei einem kombinierten Kühl- und Gefriergerät oder bei einem reinen Gefriergerät einsetzbar ist. Ebenso ist anzumerken, daß die Aufzählung der am Hut 16 und am Sockel 18 befestigbare Anbauteile nicht abschließend ist.

Es ist weiter festzuhalten, daß aufgrund der Erfindung alle äußeren Anbauteile nicht am Gehäuse 4, sondern am Hut 16 bzw. am Sockel 18 befestigt werden können und daß eine Justierbarkeit von Gerätetür 6 und Gehäuse 4 gegeben ist, wobei im Gehäuse 4 insgesamt nur zehn angeschweißte Gewindebolzen 14 vorgesehen sind.

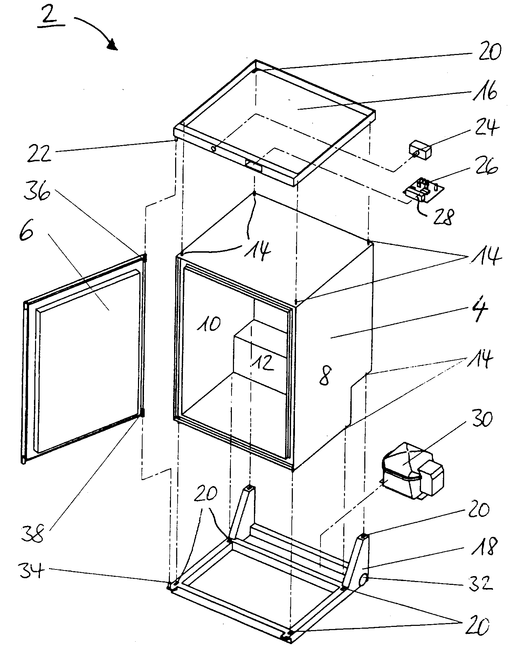

## Patentansprüche

1. Kühl- und/oder Gefriergerät (2) mit einem vakuumisolierten Gehäuse (4) und/oder mit einer vakuumisolierten Gerätetür (6), dadurch gekennzeichnet, daß das Gehäuse (4) zwischen einem Sockel (18) und einem Hut (16) angeordnet ist, wobei sämtliche Anbauteile, wie zum Beispiel Türlager, Gerätefüße, Kompressor oder sonstige elektrische Bauteile, am Sockel (18) und/oder am Hut (16) anordenbar sind und anschließend der entsprechend vormontierte Sockel (18) und der entsprechend vormontierte Hut (16) mit Hilfe einer vergleichsweise geringen Anzahl von vorgesehenen Verbindungselementen (14) am Gehäuse (4) ankoppelbar sind.

2. Kühl- und/oder Gefriergerät (2) nach Anspruch 1, dadurch gekennzeichnet, daß der Sockel (18) mit dem Gehäuse (4) justierbar verbunden ist.

3. Kühl- und/oder Gefriergerät (2) nach Anspruch 1 oder 2, dadurch gekennzeichnet, daß der Hut (16) mit dem Gehäuse (4) justierbar verbunden ist.

4. Kühl- und/oder Gefriergerät (2) nach einem der Ansprüche 1 bis 3, dadurch gekennzeichnet, daß das Gehäuse (4) zwischen Befestigung des Sockels (18) und/oder des Huts (16) angeschweißte Gewindebolzen (14) aufweist.

5. Kühl- und/oder Gefriergerät (2) nach einem der Ansprüche 1 bis 4, gekennzeichnet durch ein metallisches Gehäuse (4), vorzugsweise durch ein Edelstahlgehäuse.

## Claims

1. Refrigerating and freezing appliance (2) having a vacuum-insulated housing (4) and/or a vacuum-insulated appliance door (6), characterised in that the housing (4) is disposed between a pedestal (18) and a top (16), wherein all components such as the door bearing, appliance feet, compressor or other electrical components are capable of being disposed on the pedestal (18) and/or on the top (16) and then the pedestal (18) accordingly preassembled and the top accordingly preassembled are capable of being coupled by means of a comparatively small number of connecting elements (14) provided to the housing (4).

2. Refrigerating and freezing appliance (2) according to claim 1, characterised in that the pedestal (18) is connected adjustably to the housing (4).

3. Refrigerating and freezing appliance (2) according to claim 1 or 2, characterised in that the top (16) is connected adjustably to the housing (4).

4. Refrigerating and freezing appliance (2) according to one of claims 1 to 3, characterised in that the housing (4) has between the fixing of the pedestal (18) and/or of the top (16) welded threaded bolts (14).

5. Refrigerating and freezing appliance (2) according to one of claims 1 to 4, characterised by a metal housing (4), preferably by a high-grade steel housing.

## Revendications

1. Appareil de refroidissement et/ou de congélation (2) avec une enceinte (4) à isolation de vide et/ou une porte d'appareil (6) à isolation de vide, caractérisé en ce que l'enceinte (4) est disposée entre un socle (18) et un chapeau (16), où toutes les parties de montage, comme par exemple le palier de porte, les pieds-support de l'appareil, le compresseur ou d'autres composants électriques peuvent être disposées au socle (18) et/ou au chapeau (16) et qu'ensuite, le socle (18) prémonté d'une manière correspondante et le chapeau (16) prémonté d'une manière correspondante peuvent être accouplés à l'aide d'un nombre relativement réduit d'éléments d'assemblage prévus (14) à l'enceinte (4).

2. Appareil de réfrigération et/ou de congélation (2) selon la revendication 1, caractérisé en ce que le socle (18) est assemblé d'une manière ajustable avec l'enceinte (4).

3. Appareil de réfrigération et/ou de congélation (2) selon l'une des revendications 1 ou 2, caractérisé en ce que le chapeau (16) est assemblé d'une manière ajustable avec l'enceinte (4).

4. Appareil de réfrigération et/ou de congélation (2) selon l'une des revendications 1 à 3, caractérisé en ce que le boîtier (4) présente des boulons filetés (14) soudés entre la fixation du socle (18) et/ou du chapeau (16).

5. Appareil de réfrigération et/ou de congélation (2) selon l'une des revendications 1 à 4, caractérisé par une enceinte métallique (4), de préférence par une enceinte en acier fin.
